# EUROPÄISCHE PATENTSCHRIFT

(11) **EP 1 681 188 B1**
(45) Veröffentlichungstag und Bekanntmachung des Hinweises auf die Patenterteilung: **21.11.2007**
(21) Anmeldenummer: 06000374.6
(22) Anmeldetag: 10.01.2006
(51) Int. Cl.: B60G 17/02, B60G 15/06, F16F 15/02

(54) **Verfahren zum Betrieb eines Federträgers mit elektrischer Federkraftverstellung**
Method of operating a spring support with electrical adjustment of the spring force
Procédé de fonctionnement d'un support de ressort à régulation électrique de la force du ressort

(30) Priorität: 14.01.2005 DE 102005001736
(43) Veröffentlichungstag der Anmeldung: 19.07.2006
(73) Patentinhaber: ZF FRIEDRICHSHAFEN AG, 88046 Friedrichshafen (DE)
(72) Erfinder: Ketteler, Hermann, 88677 Markdorf (DE); Münster, Martin, 88046 Friedrichshafen (DE); Mair, Ulrich, 88045 Friedrichshafen (DE)

(56) Entgegenhaltungen:
- EP-A- 0 363 158
- EP-A- 0 436 870
- WO-A-91/04876
- DE-A1- 10 120 102
- DE-A1- 10 122 542
- DE-B3- 10 255 764

## Beschreibung

Die Erfindung betrifft einen Federträger gemäß dem Oberbegriff von Patentanspruch 1.

Aus der DE 102 55 764 B3 ist Federträger bekannt, der einen E-Motor aufweist, um einen Federteller für eine Fahrzeugtragfeder in seiner axialen Position zu verstellen. Die axiale Position des Federtellers bestimmt eine Vorspannkraft der Fahrzeugtragfeder. Je höher Vorspannkraft eingestellt ist, um so kleiner ist die Einfederungsbewegung eines Fahrzeugaufbaus. Mit einem derartigen Federträger kann man eine Niveauregulierung erzielen oder einer Wank-und/oder Nickbewegung entgegenwirken.

Bei hydraulischen oder pneumatischen Niveauregulierungen wird der energieärmste Zustand des Systems auf die Konstruktionslage bezogen. Die Konstruktionslage des Fahrzeugs entspricht beispielsweise der Beladung mit einer Person und einem Gepäckanteil. Bei Erreichen der Konstruktionslage wird beispielsweise die Pumpe für das Niveauregelsystem abgeschaltet.

In der DE 689 21 534 T2 wird eine Kombination einer Luftfeder mit einer elektromotorischen Federverstellung beschrieben, wobei der E-Motor in Ruhelage keine Kraft ausübt. (Fig. 7). Erst bei einer Abweichung der Momentanlage von einer Konstruktionslage, die einer Beladung eines Fahrzeugs mit z. B. einer Person inkl. Gepäck entspricht, wird der E-Motor aktiviert. Prinzipbedingt steigt mit zunehmender Kraft des E-Motors auch die Verlustleistung entsprechend der Stromstärke im Quadrat. Bei einer Verdoppelung der Beladung erreicht die Verlustleistung einen vierfachen Wert. Dadurch wird die Verlustleistung zu einem wesentlichen Entscheidungskriterium bei der Auswahl des E-Motors.

Die gattungsbildende DE 101 22 542 A1 beschreibt ein Verfahren zum Betrieb eines Federträgers zwischen einem Stützelement und einer zum Stützelement beweglichen Traglast, wobei der Federträger mindestens eine Feder aufweist, deren Vorspannkraft mittels eines elektrischen Aktuators einstellbar ist, um einen definierten Abstand der Traglast zum Stützelement zu erreichen. Die Feder soll dabei derart eingestellt sein, dass in beiden Richtungen die von dem Motor auszuübende Kraft gleich groß ist.

Aufgabe der vorliegenden Erfindung ist es ein Verfahren zum Betrieb eines Federträgers mit elektrischer Verstellung der Federkraft zu realisieren, das eine möglichst geringe Verlustleistung für den Aktuator mit sich bringt.

Erfindungsgemäß wird die Aufgabe dadurch gelöst, dass die durch die Vorspannung der Feder erzeugte Tragkraft die Traglast auf ein Niveau H₁ hebt, wobei die Tragkraft größer ist als erforderlich wäre die Traglast auf ein Normal-Nivau H₀ zu halten, wobei der elektrische Aktuator eine Kraft (F_{MS}) entgegen der Tragkraft (F_{F}) der Feder ausübt, um den definierten Abstand (H₀) zu erreichen.

Der Vorteil dieser bewußt zu groß dimensionierten Federkraft besteht darin, dass der elektrische Aktuator bei einer zulässigen Beladung einen deutlich kleineren Stützkraftanteil aufbringen muss, um den defininierten Abstand einzuhalten, als bei einer exakt auf den definierten Abstand ausgelegte Federkraft. Zwar muss der elektrische Aktuator häufig aktiviert werden, um den definierten Abstand zwischen der Traglast und dem Stützelement zu erreichen, jedoch nicht mit den Stützkraftspitzenwerten. Die Stützkraftspitzenwerte bestimmen die auftretende Verlusteistung im elektrischen Aktuator. Wenn man die Verlustleistung minimiert, dann kann man einen leistungsschwächeren elektrischen Aktuator verwenden, der deutlich geringer thermisch beansprucht wird. Ein leistungsschwächerer Aktuator benötigt in der Regel auch einen kleineren Bauraum.

Anhand der folgenden Figurenbeschreibung soll die Erfindung näher erläutert werden. Es zeigt:
- Fig. 1: Prinzipdarstellung von einem Federträger mit elektrisch verstellbarer Vorspannkraft
- Fig. 2: Kraft-Niveaulagen-Diagramm

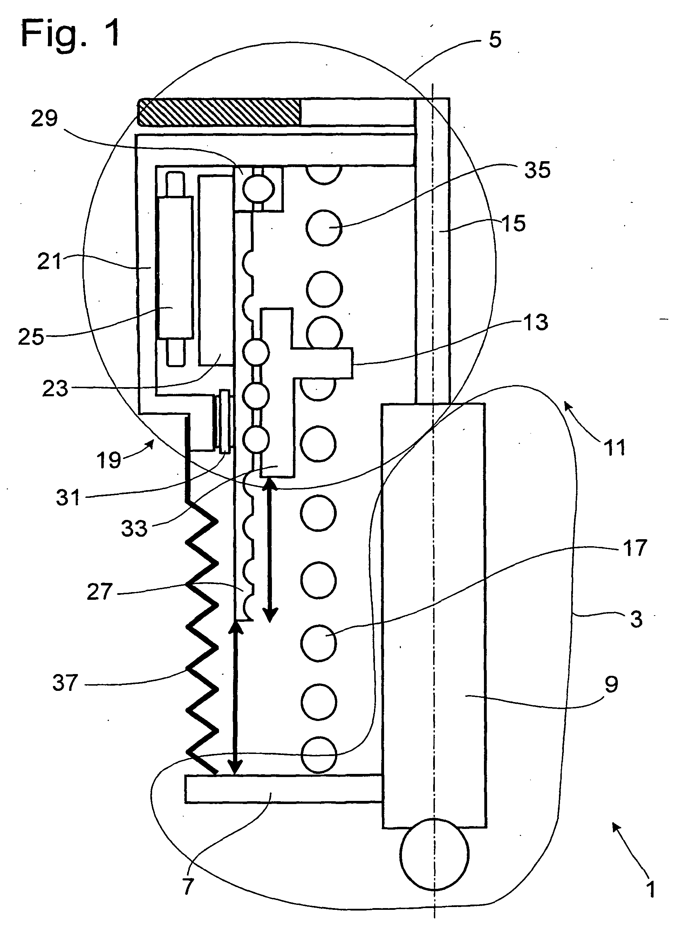

Die Fig. 1 zeigt ein Prinzipschaubild eines Federträgers 1, der zwei axial relativ zu einander bewegliche Baugruppen 3; 5 aufweist. Die Baugruppe 5 kann mit einer Traglast z. B. in der Ausführung eines Fahrzeugaufbaus verbunden sein. Eine erste Baugruppe 3 umfasst einen Federteller 7, der z. B. an einem Zylinder 9 eines Schwingungsdämpfers 11 befestigt ist. Die zweite Baugruppe 5 verfügt über einen Federteller 13, der mit einer Kolbenstange 15 des Schwingungsdämpfers 11 in Wirkverbindung steht. Zwischen den beiden Federtellern 7; 13 ist eine Feder 17 verspannt. Grundsätzlich kann man den Federteller 7 z. B. auch direkt an einer Fahrzeugachse als Stützelement anordnen und den oberen Federteller 13 auch ohne Kolbenstange 15 mit einem Fahrzeugaufbau in Wirkverbindung bringen, so dass die Verwendung eines koaxial angeordneten Schwingungsdämpfers für die Erfindung nicht zwingend notwendig ist.

Die zweite Baugruppe 5 umfasst einen elektrischen Aktuator 19 in einem Gehäuse 21. Der Aktuator verfügt über einen Rotor 23 und einen Stator 25. Bezogen auf den Stator 25 stellt der Rotor 23 einen Innenläufer dar. Generell ist der konstruktive Aufbau des Federträgers untergeordnet. Nach radial innen treibt der Rotor eine Gewindespindel 27 an, die sich über ein erstes Lager 29 und ein zweites Lager 31 am Gehäuse 21 des Aktuators 19 abstützt. Die Gewindespindel verfügt am Innendurchmesser über ein Bewegungsgewinde und steht mit einer Gewindemutter 33 in Eingriff. Der Federteller 13 ist an der Gewindemutter 33 befestigt und erstreckt sich nach radial innen. Eine Drehbewegung des Rotors wird von der Gewindespindel 27 in Verbindung mit der Gewindemutter 33 in eine Axialbewegung des Federtellers 13 umgesetzt, so dass über den Aktuator die Vorspannung der Feder 17 eingestellt werden kann.

Neben der Tragfeder 17, die zwischen dem verstellbaren Federteller 13 und dem Federteller 7 der ersten Baugruppe verspannt ist, stützt sich eine zweite Feder 35 zwischen der zweiten Baugruppe und dem axial verstellbaren Federteller 13 ab. Die zweite Feder sorgt für eine statische Entlastung des Aktuators. Bei einer Verstellbewegung des Aktuators wird die Gesamtfederrate der beiden Federn 17; 35 verändert und zur Lageregelung eines Fahrzeugs genutzt.

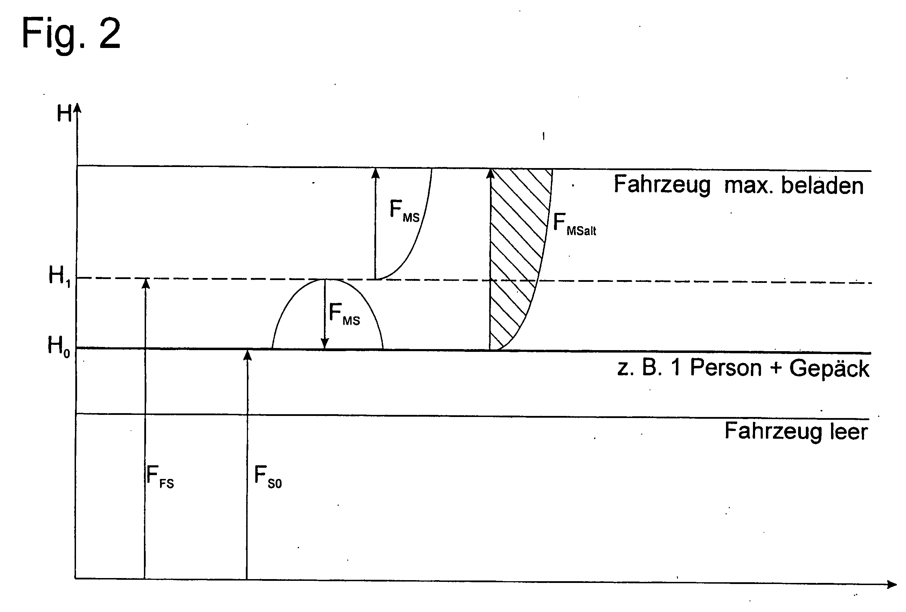

Die Figur 2 zeigt ein Schaubild für die Auslegung der Federkraft, wobei nicht unbedingt zwei Federn 17; 35 verwendet werden müssen, sondern auch eine einzelne Feder ausreichen kann. Eine Volllinie steht für eine Niveaulage H₀, die von dem Fahrzeugaufbau bei einer Normalbeladung eingenommen wird. Die Normalbeladung kann z. B. dem Gewicht einer erwachsenen Person inkl. Gepäck entsprechen. Zur Abstützung dieser Last wäre eine Stützlast Fso notwendig. Die Feder(n) verfügen jedoch über eine Vorspannkraft F_{FS}, die den Fahrzeugaufbau auf dem Niveau H₁ tragen würden. Um den Fahrzeugaufbau auf den definierten Abstand zum Stützelement bzw. zur Standfläche zu bewegen, wird der elektrische Aktuator derart betrieben, dass eine Kraft F_{MS} gegen die Kraft F_{FS} der Feder(n) 17; 35 wirkt. Dabei fällt eine gewisse Verlustleistung an, die sich thermisch auswirkt und deren qualitative Größe durch die Parabeldarstellung verdeutlicht werden soll.

Wenn der Fahrzeug das Niveau H₁ einnimmt, ist die Kraft FMS gleich Null, so dass keine Verlustleistung anfällt. Das Niveau H₁ kann z. B. exakt zwischen dem Minimal- und dem Maximalbeladungzustand liegen, jedoch auch empirisch bestimmt sein.

Wird das Fahrzeug stärker beladen, dann kann die Kraft FMS des elektrischen Aktuators 19 reduziert und der vorhandene Überschuss der Federkraft FFS genutzt werden. Bei einem maximalen Beladungszustand des Fahrzeugs muss die Kraft FMS ggf. nicht oder nur wenig größer sein als bei einem unbeladenen Fahrzeug. Die angesprochene Verlustleistung ist proportional FMS², d. h. eine Verdoppelung der Kraft des Aktuators würde eine Vervierfachung der Verlustleistung und damit der thermischen Belastung nach sich ziehen. In dem Schaubild ist beispielhaft für die bisherige Auslegung die Parabel mit der Aktuatorkraft F_{MSalt} eingezeichnet, so dass der erreichte Vorteil noch deutlicher wird.

## Patentansprüche

1. Verfahren zum Betrieb eines Federträgers (1) zwischen einem Stützelement und einer zum Stützelement beweglichen Traglast, wobei der Federträg (1) mindestens eine zweite Feder (35) aufweist, deren Tragkraft mittels eines elektrischen Aktuators einstellbar ist, um einen definierten Abstand der Traglast zum Stützelement zu erreichen,
**dadurch gekennzeichnet,**
**dass** die durch die Vorspannung der zweiten Feder (35) erzeugte Tragkraft die Traglast auf ein Niveau H₁ hebt, wobei die Tragkraft größer ist, als erforderlich wäre die Traglast auf einem Normal-Nivau (H₀) zu halten, wobei der elektrische Aktuator eine Kraft (F_{MS}) entgegen der Tragkraft (F_{F}) der zweiten Feder (35) ausübt, um den definierten Abstand (H₀) zu erreichen.

## Claims

1. Method of operating a spring support (1) between a support element and a load which moves relative to the support element, with the spring support (1) having at least one second spring (35) whose load-bearing force can be adjusted by means of an electrical actuator in order to achieve a defined distance between the load and the support element,
**characterized**
**in that** the load-bearing force generated by the prestress of the second spring (35) lifts the load to a level H₁, with the load-bearing force being greater than would be required to hold the load at a normal level (H₀), with the electrical actuator exerting a force (F_{MS}) against the load-bearing force (F_{F}) of the second spring (35) in order to achieve the defined distance (H₀) .

## Revendications

1. Procédé de fonctionnement d'un support de ressort (1), entre un élément de support et une charge porteuse mobile par rapport à l'élément de support, le support de ressort (1) présentant au moins un deuxième ressort (35), dont la force de support peut être ajustée au moyen d'un actionneur électrique, pour atteindre un espacement défini de la charge porteuse par rapport à l'élément de support,
**caractérisé en ce que**
la force de support produite par la précontrainte du deuxième ressort (35) soulève la charge porteuse à un niveau H₁, la force de support étant supérieure à ce qui serait nécessaire si la charge porteuse était à un niveau normal (H₀), l'actionneur électrique exerçant une force (F_{MS}) à l'encontre de la force de support (F_{F}) du deuxième ressort (35), afin d'atteindre la distance définie (H₀).
